# EUROPEAN PATENT SPECIFICATION

(11) **EP 4 020 696 B1**
(45) Date of publication and mention of the grant of the patent: **04.11.2026**
(21) Application number: 20873558.9
(22) Date of filing: 03.09.2020
(51) Int. Cl.: H01M 50/517, H01M 50/209, H01M 50/503

(54) **CONNECTION MEMBER CONNECTED TO ELECTRODE LEAD BY PHYSICAL COUPLING, AND BATTERY CELL STACK COMPRISING SAME**
MIT EINER ELEKTRODENLEITUNG DURCH PHYSIKALISCHE KOPPLUNG VERBUNDENES VERBINDUNGSELEMENT UND BATTERIEZELLENSTAPEL DAMIT
ÉLÉMENT DE CONNEXION CONNECTÉ À UN FIL D'ÉLECTRODE PAR COUPLAGE PHYSIQUE, ET EMPILEMENT D'ÉLÉMENTS DE BATTERIE LE COMPRENANT

(30) Priority: 08.10.2019 KR 20190124560
(43) Date of publication of application: 29.06.2022
(73) Proprietor: LG ENERGY SOLUTION, LTD., Seoul 07335 (KR)
(72) Inventor: HWANG, Sung Tack, Daejeon 34122 (KR); PARK, Jin Woo, Daejeon 34122 (KR)
(74) Representative: Hoffmann Eitle
(86) International application number: PCT/KR2020/011810
(87) International publication number: WO 2021/071099

(56) References cited:
- WO-A1-2018/186594
- WO-A1-2019/074206
- CN-U- 205 882 078
- JP-A- 2013 206 844
- JP-A- 2014 022 256
- KR-A- 20180 065 234
- KR-A- 20180 127 760
- KR-A- 20190 107 396

## Description

### [Technical Field]

The present invention relates to a connection member connected to electrode leads by physical coupling and a battery cell stack including the same, and more particularly to a connection member including a pair of a first connection member and a second connection member arranged in tight contact with outer surfaces of electrode leads in order to perform electrical connection therebetween and a battery cell stack including the same.

### [Background Art]

A secondary battery is widely used in medium- or large-sized devices, such as vehicles or power storage apparatuses, as well as small-sized devices, such as portable electronic devices. In the case in which the secondary battery is used in medium- or large-sized devices, a plurality of secondary batteries is electrically connected to each other to constitute a battery module or a battery pack in order to increase the capacity and output thereof.

Electrode leads are connected to each other such that the secondary batteries are electrically connected to each other in the battery module, and the connection portion therebetween may be welded in order to maintain the state in which the electrode leads are connected to each other. To this end, one end of each of the electrode leads may be fixed to a bus bar, configured to perform electrical connection between the secondary batteries, in contact therewith by welding, etc.

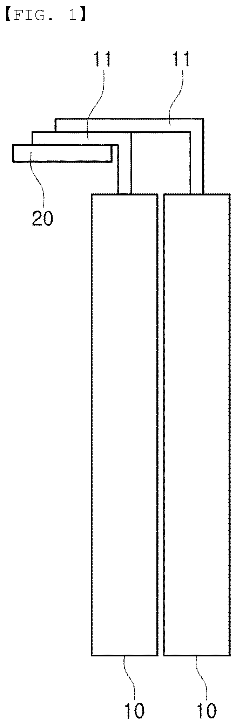

In connection therewith, FIG. 1 is a front view showing a general coupling state between electrode leads and a bus bar.

Referring to FIG. 1, two battery cells 10 are arranged in tight contact, each of the battery cells 10 is provided with an electrode lead 11, which protrudes upwards therefrom, and the electrode leads 11 are bent by 90 degrees and attached to the outer surface of one side of a single bus bar 20. In such a bending process, the electrode leads may be damaged.

The bent electrode leads 11 are coupled to the outer surface of one side of the bus bar 20 at the portions thereof that overlap the outer surface thereof by welding, and the electrode leads are damaged by heat generated during the welding process.

In connection therewith, Patent Document 1 discloses a bus bar assembly having a structure in which electrode leads are coupled to a bus bar while the electrode leads are not bent such that the electrode leads can be brought into tight contact with the bus bar and a battery module including the same. However, ends of the electrode leads of Patent Document 1 are clamped by the bus bar assembly and are then coupled to each other by welding. As a result, a problem in that the electrode leads are damaged by welding heat has yet to be resolved.

Therefore, there is a high need to solve a problem in that, in a process of coupling electrode leads to a bus bar in order to connect a plurality of battery cells to each other, the electrode leads are damaged.

KR 2018-0127760 A concerns a battery module. The battery module includes: a battery cell stack body in which a plurality of battery cells are stacked; and a plurality of bus bars individually coupled to an electrode lead formed on each of the plurality of battery cells. The bus bar includes: a frame on which the electrode lead of the battery cell is mounted; and a conductive member coupled to the frame to be electrically coupled to the electrode lead.

KR 2019-0107396 A concerns a battery module comprising: a cell stacked body including a plurality of battery cells having an electrode lead; and a busbar assembly including a busbar electrically connecting the battery cells and a busbar frame having a busbar insertion unit into which the busbar is inserted. The electrode lead has a lead groove concavely formed on an end. The busbar comprises: a lead insertion unit into which the end of the electrode lead is inserted; and a lead hooking unit limiting movements of the electrode lead inserted into the lead insertion unit.

WO 2018/186594 A1 relates to a battery module. A secondary battery has electrode leads. An insulating bolt is inserted through a bolt hole provided in the electrode leads and is engaged with a nut under a bending portion of the electrode leads.

WO 2019/074206 A1 concerns a bus bar assembly. The bus bar assembly comprises: a fixed bus bar arranged in a rod conductor form; a pair of movable bus bars arranged to be spaced apart from both sides of the fixed bus bar located in the middle between the movable bus bars, to form a fitting space between the fixed bus bar and each of the movable bus bars wherein at least one electrode lead can be inserted in the fitting space; and a close contact member which, in a state where the electrode lead is disposed in the fitting space, moves the pair of movable bus bars close to the fixed bus bar and then brings the electrode lead into close contact with the fixed bus bar.

JP 2013 206844 A concerns an electrode connection structure. The electrode connection structure connects electrodes of two laminate cell batteries. The electrode connection structure includes a conductive connection tab arranged so as to be in contact with both of two electrodes being connected, and a press member for pressing and holding the electrodes and the connection tab. The connection tab is provided with a plurality of protrusions formed to protrude toward the electrodes.

### (Prior Art Document)

(Patent Document 1) KR 2019-0051157 A

### [Disclosure]

### [Technical Problem]

The present invention has been made in view of the above problems, and it is an object of the present invention to provide a connection member connected to electrode leads while deforming the electrode leads such that the electrode leads are brought into physical contact with each other without welding and a battery cell stack including the same.

### [Technical Solution]

In order to accomplish the above objects, a connection member according to the present invention, which is a connection member configured to perform electrical connection between electrode leads, is defined in claim 1. The connection member includes a pair of a first connection member and a second connection member, one of the first connection member and the second connection member is provided with a fixing portion configured to perform connection therebetween, and the other of the first connection member and the second connection member is provided with a catching portion configured to allow the fixing portion to be fastened thereto.

Each of the first connection member and the second connection member includes a bus bar configured to perform electrical connection and a plate configured to fix the bus bar, and the fixing portion and the catching portion are formed at the plates. The fixing portion is configured to be coupled to one surface of the plate while wrapping the same. The catching portion forming the coupling part with the fixing portion is configured in a structure having a step formed therein, or the part of the fixing portion that is caught by the catching portion so as to be fixed thereto is small, and the catching portion forming the coupling part with the fixing portion is configured in a structure having a recess formed therein.

Each of the plates including the fixing portion and the catching portion may be made of an insulating material.

The fixing portion and the catching portion may be formed so as to constitute a coupling pair, and two or more coupling pairs may be provided.

In a concrete example, two fixing portions may be formed at the first connection member, and two catching portions may be formed at the second connection member.

Alternatively, a fixing portion and a catching portion may be formed at each of the first connection member and the second connection member, the fixing portion of the first connection member may be fastened to the catching portion of the second connection member, and the fixing portion of the second connection member may be fastened to the catching portion of the first connection member.

At least a part of the fixing portion may be made of an elastic material.

At least a part of the plate may be made of an elastic material.

The present invention also provides a battery cell stack having electrical connection performed by above the connection member, as defined in claim 8. The battery cell stack is constituted by two or more battery cells, the battery cells are arranged in tight contact in the state in which coupling surfaces of electrode leads of the battery cells are disposed so as to face each other, and the coupling surfaces of the electrode leads are brought into tight contact with each other by fastening of the connection member.

The electrode leads may be arranged in tight contact to form an electrode lead bundle, and the outermost electrode leads of the electrode lead bundle may be brought into tight contact with a bus bar of the first connection member and a bus bar of the second connection member, respectively, whereby electric connection therebetween is performed.

The battery cell stack may include a first battery cell stack and a second battery cell stack, the first battery cell stack may include a first electrode lead bundle, the second battery cell stack may include a second electrode lead bundle, the first battery cell stack and the second battery cell stack may be disposed so as to face each other in the state in which the first electrode lead bundle and the second electrode lead bundle are located adjacent to each other, and coupling surfaces of the first electrode lead bundle of the first battery cell stack and the second electrode lead bundle of the second battery cell stack may be coupled so as to be brought into tight contact with each other by the first connection member and the second connection member.

In addition, the present invention provides a battery pack including the above battery cell stack, as defined in claim 11.

A device may use the battery pack as an energy source. The device may be an electric vehicle, a hybrid electric vehicle, a power storage apparatus, an electric bicycle, or an electric wheelchair.

### [Description of Drawings]

FIG. 1 is a front view showing a general coupling state between electrode leads and a bus bar.
FIG. 2 is a perspective view of a connection member according to a first embodiment.
FIG. 3 is a perspective view showing the process in which the connection member of FIG. 2 is coupled to a battery cell stack.
FIG. 4 is a perspective view showing the state in which the connection member of FIG. 3 is coupled to electrode leads.
FIG. 5 is a perspective view showing the state in which a connection member according to a second embodiment is connected to a battery cell stack.
FIG. 6 is a perspective view showing the state in which a connection member according to a third embodiment is connected to a battery cell stack.
FIG. 7 is a perspective view showing the state in which a connection member according to a fourth embodiment is connected to a battery cell stack.
FIG. 8 is a plan view showing the state in which two battery cell stacks, one of which is shown in FIG. 7, are connected to each other.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

Hereinafter, embodiments of the present invention will be described in detail with reference to the accompanying drawings.

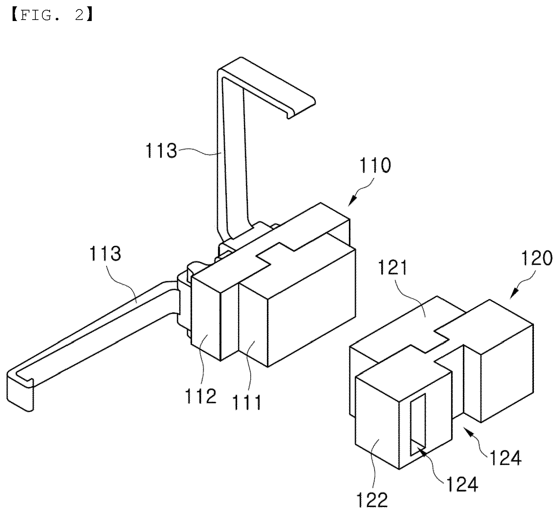

FIG. 2 is a perspective view of a connection member according to a first embodiment.

Referring to FIG. 2, the connection member is constituted by a first connection member 110 and a second connection member 120, the first connection member 110 includes a bus bar 111 configured to perform electrical connection and a plate 112 configured to fix the bus bar 111, and the second connection member 120 includes a bus bar 121 configured to perform electrical connection and a plate 122 configured to fix the bus bar 121.

In the connection member according to the present invention, one of the first connection member and the second connection member is provided with a fixing portion configured to perform connection therebetween, and the other of the first connection member and the second connection member is provided with a catching portion configured to allow the fixing portion to be fastened thereto. The fixing portion and the catching portion are formed in equal numbers so as to form a coupling pair.

Meanwhile, the fixing portion and the catching portion are formed at the plates, and each of the plates is made of an insulating material. Specifically, each of the fixing portion and the catching portion is also made of an insulating material.

Consequently, only the bus bars, which are connected to electrode leads, are made of an electrically conductive material, and electrical connection between the remaining components of the connection member, i.e. the fixing portion and the catching portion, including the plates, is interrupted.

In order to maintain coupling between the first connection member and the second connection member, it is preferable that two or more coupling pairs of fixing portions and catching portions be provided. The connection member of FIG. 2 has two coupling pairs.

That is, two fixing portions 113 are formed at the first connection member 110, and two catching portions 124 configured to receive the two fixing portions are formed at the second connection member 120.

However, the two fixing portions 113 may be configured in different shapes depending on how the fixing portions are mounted to the catching portions. Specifically, referring to FIG. 2, the part of the fixing portion 113 located on the left side of the figure that is caught by the catching portion 124 so as to be fixed thereto is small, and therefore the catching portion forming the coupling pair therewith is configured in a structure having a recess formed therein. On the other hand, the fixing portion 113 located at the upper part of the figure is configured to be coupled to one surface of the plate 122 while wrapping the same, and therefore the catching portion 124 formed at the plate 122 is configured in a structure having a step formed therein.

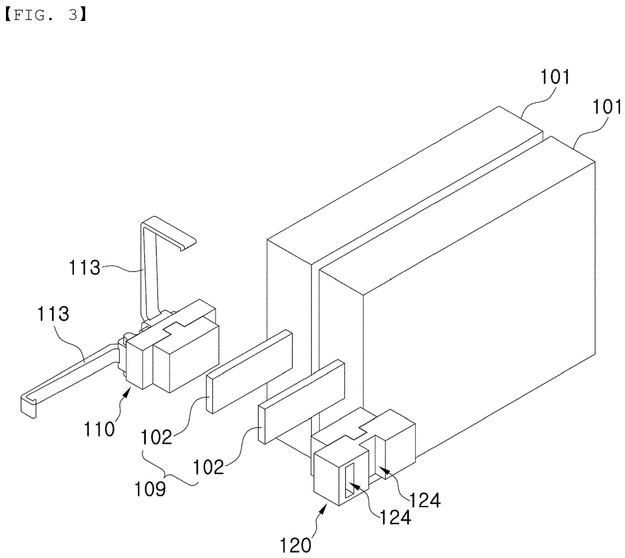

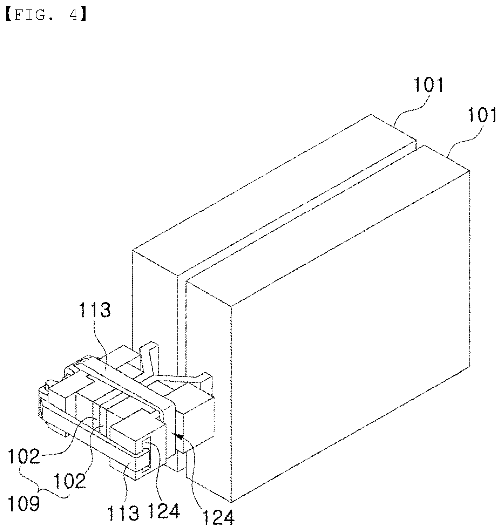

FIG. 3 is a perspective view showing the process in which the connection member of FIG. 2 is coupled to a battery cell stack, and FIG. 4 is a perspective view showing the state in which the connection member of FIG. 3 is coupled to electrode leads.

Referring to FIGS. 3 and 4, there is shown a battery cell stack having electrical connection performed by the connection member of FIG. 2. In the battery cell stack, coupling surfaces of electrode leads 102 of two battery cells 101 are arranged in tight contact in the state of being disposed so as to face each other. In FIGS. 3 to 8, however, battery cells are shown as having spaces defined therebetween for convenience of understanding.

The coupling surfaces of the electrode leads 102 are brought into tight contact with each other by fastening of the connection member to form an electrode lead bundle 109.

The outermost electrode leads of the electrode lead bundle 109 are brought into tight contact with the bus bar 111 of the first connection member 110 and the bus bar 121 of the second connection member 120, respectively, whereby electric connection between the battery cells is performed.

The electrode leads 102 are in an unbent state before the connection member is coupled thereto. When the connection members move so as to be close to each other and fastened to each other, however, the electrode leads move in a direction toward the coupling surfaces thereof at the center therebetween and are arranged in tight contact with each other, whereby it is possible to solve the conventional problem in which the electrode leads are perpendicularly bent such that the electrode leads are attached to the bus bar, whereby the electrode leads are mechanically damaged.

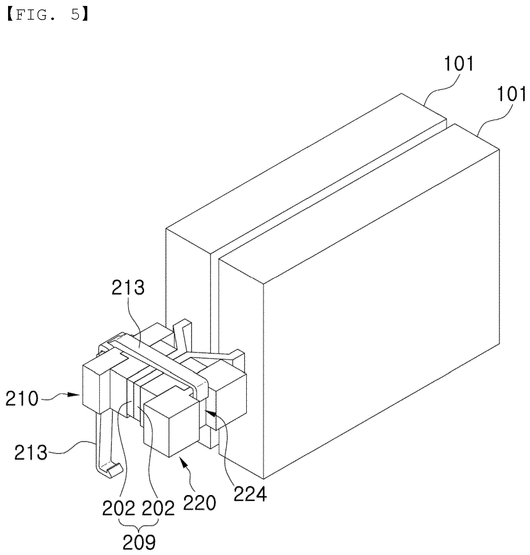

FIG. 5 is a perspective view showing the state in which a connection member according to a second embodiment is connected to a battery cell stack.

Referring to FIG. 5, the battery cell stack is constituted by two battery cells 101, and the connection member, which includes a first connection member 210 and a second connection member 220, is added to outer surfaces of two electrode leads 202, whereby coupling therebetween is performed. Electrical connection between the battery cells is performed while the electrode leads 202 form an electrode lead bundle 209.

When comparing the connection member of FIG. 5 with the connection member of FIGS. 2 to 4, there is a difference in positions of a pair of a fixing portion and a catching portion. In the figure, a pair of a fixing portion 213 and a catching portion 224 is disposed at each of the upper surface and the lower surface of the electrode lead bundle.

In the case in which the connection member having the structure described above is used, an electric connection portion configured to perform connection with another battery cell stack may be formed at ends of the electrode leads in the protruding direction thereof.

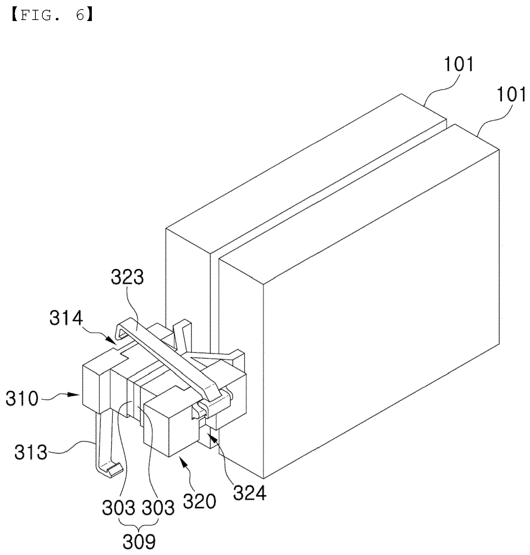

FIG. 6 is a perspective view showing the state in which a connection member according to a third embodiment is connected to a battery cell stack.

Referring to FIG. 6, the battery cell stack of FIG. 6 is similar to the battery cell stack of FIG. 5; however, there is a difference in that a fixing portion and a catching portion are formed at each of a first connection member 310 and a second connection member 320.

The fixing portion 313 of the first connection member 310 is fastened to the catching portion 324 of the second connection member 320, and the fixing portion 323 of the second connection member 320 is fastened to the catching portion 314 of the first connection member 310, whereby electrical connection between electrode leads 303 is performed while coupling surfaces of the electrode leads are brought into tight contact to form an electrode lead bundle 309.

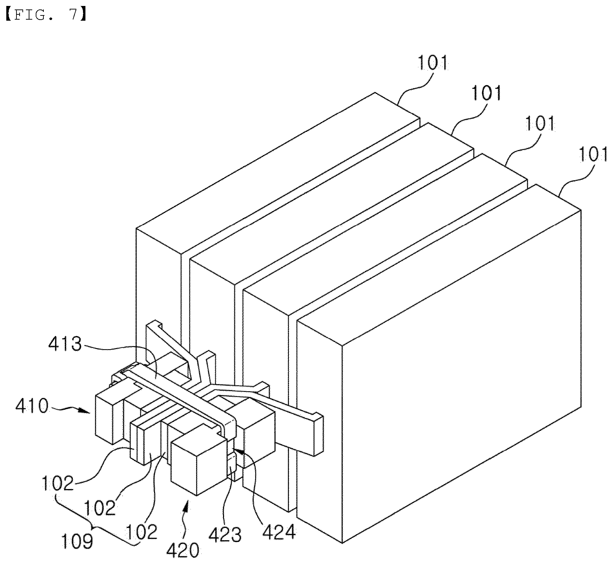

FIG. 7 is a perspective view showing the state in which a connection member according to a fourth embodiment is connected to a battery cell stack.

Referring to FIG. 7, the battery cell stack includes four battery cells 101, and electrical connection between the four battery cells 101 is performed using the connection member.

Unlike this, it is a matter of course that electrical connection between more than four battery cells may be performed by the connection member.

The connection member is identical to the connection member according to the third embodiment of FIG. 6 in positions at which fixing portions 413 and 423 and a catching portion 424 are formed; however, there is a difference in that the lengths of the fixing portions 413 and 423 are increased.

That is, the fixing portion 413 of a first connection member 410 is fastened to the catching portion 424 of a second connection member 420, and the fixing portion 423 of the second connection member 420 is fastened to a catching portion (not shown) of the first connection member 410, whereby electrical connection between electrode leads 102 is performed while the electrode leads are arranged in tight contact to form an electrode lead bundle 109.

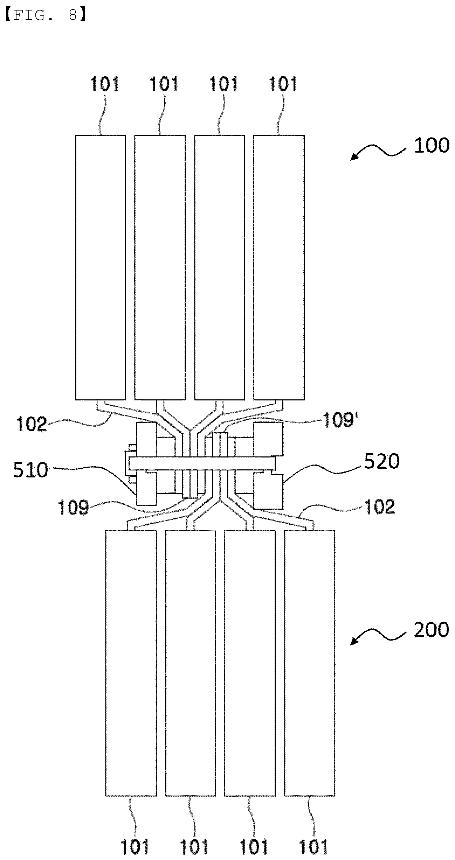

FIG. 8 is a plan view showing the state in which two battery cell stacks, one of which is shown in FIG. 7, are connected to each other.

Referring to FIG. 8, the battery cell stacks include a first battery cell stack 100 and a second battery cell stack 200, the first battery cell stack 100 includes an electrode lead bundle 109 constituted by four electrode leads 102 extending from four battery cells 101, and the second battery cell stack 200 includes an electrode lead bundle 109' constituted by four electrode leads 102 extending from four battery cells 101.

The first battery cell stack 100 and the second battery cell stack 200 are disposed so as to face each other in the state in which the electrode lead bundle 109 and the electrode lead bundle 109' are located adjacent to each other. Coupling surfaces of the electrode lead bundle 109 of the first battery cell stack 100 and the electrode lead bundle 109' of the second battery cell stack 200 are coupled to each other in tight contact by a first connection member 510 and a second connection member 520.

In a concrete example, at least a part of the fixing portion may be made of an elastic material.

For example, the remainder of the fixing portion excluding the portion configured to be fastened to the catching portion is made of a polymer material that exhibits elasticity or a rubber material, the fixing portion may be fastened to the catching portion in a stretched state, and subsequently the fixing portion is contracted due to elastic force thereof, whereby the electrode leads may be fixed to each other in tighter contact.

Alternatively, an elastic material may be applied to at least a part of the plate. In the case in which the catching portion, which is a part of the plate, is made of an elastic material, the catching portion may be pressed so as to be contracted when the fixing portion is fastened to the catching portion, whereby the fixing portion is easily fastened to the catching portion, and subsequently when the pressed state of the catching portion is released, the catching portion is restored to the state before the catching portion is pressed due to elastic force thereof, whereby it is possible to stably maintain the fastened state of the fixing portion.

In addition, an elastic material may be applied to a part of the fixing portion and a part of the plate, whereby it is possible to simultaneously obtain the effect of stably fixing the electrode leads and the effect of stably fastening the fixing portion.

Meanwhile, as the case in which the connection member according to the present invention is used, in the case in which connection between a battery cell stack having electrical connection performed using the connection member and an electrode lead of another battery cell or a bus bar of another battery cell stack is necessary, the electrode lead of the other battery cell or the bus bar of the other battery cell stack may be interposed between the first connection member and/or the second connection member and the outermost electrode lead of the electrode lead bundle.

In the case in which the connection member according to the present invention is used, as described above, it is possible to perform electrical connection between electrode leads of a plurality of battery cells and bus bars in the state in which the electrode leads are not excessively bent. In addition, since no welding is used, it is possible to prevent damage to the electrode leads in a bending process for welding and in a welding process.

Those skilled in the art to which the present invention pertains will appreciate that various applications and modifications are possible within the scope of the appended claims.

### (Description of Reference Numerals)

10, 101: Battery cells
11, 102, 202, 303: Electrode leads
20, 111, 121: Bus bars
100: First battery cell stack
109, 109', 209, 309: Electrode lead bundles
110, 210, 310, 410, 510: First connection members
112, 122: Plates
113, 213, 313, 323, 413, 423: Fixing portions
120, 220, 320, 420, 520: Second connection members
124, 224, 314, 324, 424: Catching portions
200: Second battery cell stack

### [Industrial Applicability]

As is apparent from the above description, in the case in which a connection member according to the present invention is used, it is not necessary to excessively bend electrode leads in a process of coupling the electrode leads to bus bars, whereby it is possible to prevent damage to the electrode leads due to mechanical deformation thereof.

In addition, a welding process performed to couple the electrode leads to the bus bars is omitted, whereby there is no concern of the electrode lead being damaged by welding heat.

## Claims

1. A connection member configured to perform electrical connection between electrode leads (102, 202, 303), wherein
the connection member comprises a pair of a first connection member (110, 210, 310, 410, 510) and a second connection member (120, 220, 320, 420, 520),
one of the first connection member (110, 210, 310, 410, 510) and the second connection member (120, 220, 320, 420, 520) is provided with a fixing portion (113, 213, 313, 323, 413, 423) configured to perform connection therebetween, and
the other of the first connection member (110, 210, 310, 410, 510) and the second connection member (120, 220, 320, 420, 520) is provided with a catching portion (124, 224, 314, 324, 424) configured to allow the fixing portion (113, 213, 313, 323, 413, 423) to be fastened thereto,
wherein
each of the first connection member (110, 210, 310, 410, 510) and the second connection member (120, 220, 320, 420, 520) comprises a bus bar (111, 121) configured to perform electrical connection and a plate (112, 122) configured to fix the bus bar (111, 121), and
the fixing portion (113, 213, 313, 323, 413, 423) and the catching portion (124, 224, 314, 324, 424) are formed at the plates,
wherein the fixing portion (113, 213, 313, 323, 413, 423) is configured to be coupled to one surface of the plate (112, 122) while wrapping the same, and the catching portion (124, 224, 314, 324, 424) forming the coupling part with the fixing portion (113, 213, 313, 323, 413, 423) is configured in a structure having a step formed therein, or the part of the fixing portion (113) that is caught by the catching portion (124) so as to be fixed thereto is small, and the catching portion (124) forming the coupling part with the fixing portion (113) is configured in a structure having a recess formed therein.

2. The connection member according to claim 1, wherein each of the plates (112, 122) comprising the fixing portion (113, 213, 313, 323, 413, 423) and the catching portion (124, 224, 314, 324, 424) is made of an insulating material.

3. The connection member according to claim 1, wherein
the fixing portion (113, 213, 313, 323, 413, 423) and the catching portion (124, 224, 314, 324, 424) are formed so as to constitute a coupling pair, and
two or more coupling pairs are provided.

4. The connection member according to claim 3, wherein
two fixing portions (113, 213,) are formed at the first connection member (110, 210, 510), and
two catching portions (124, 224) are formed at the second connection member (120, 220, 520).

5. The connection member according to claim 3, wherein
a fixing portion (313, 323, 413, 423) and a catching portion (314, 324, 424) are formed at each of the first connection member (310, 410, 510) and the second connection member (320, 420, 520),
the fixing portion (313, 323, 413, 423) of the first connection member (310, 410, 510) is fastened to the catching portion (314, 324, 424) of the second connection member (320, 420, 520), and
the fixing portion (313, 323, 413, 423) of the second connection member (320, 420, 520) is fastened to the catching portion (314, 324, 424) of the first connection member (310, 410, 510).

6. The connection member according to claim 1, wherein at least a part of the fixing portion (113, 213, 313, 323, 413, 423) is made of an elastic material.

7. The connection member according to claim 1, wherein at least a part of the plate (112, 122) is made of an elastic material.

8. A battery cell stack (100, 200) having electrical connection performed by the connection member according to any one of claims 1 to 7, wherein
the battery cell stack (100, 200) is constituted by two or more battery cells (101),
the battery cells (101) are arranged in tight contact in a state in which coupling surfaces of electrode leads (102, 202, 303) of the battery cells (101) are disposed so as to face each other, and
the coupling surfaces of the electrode leads (102, 202, 303) are brought into tight contact with each other by fastening of the connection member.

9. The battery cell stack (100, 200) according to claim 8, wherein
the electrode leads (102, 202, 303) are arranged in tight contact to form an electrode lead bundle (109, 109', 209, 309), and
outermost electrode leads (102, 202, 303) of the electrode lead bundle (109, 109', 209, 309) are brought into tight contact with a bus bar (111) of the first connection member (110, 210, 310, 410, 510) and a bus bar (121) of the second connection member (120, 220, 320, 420, 520), respectively, whereby electric connection therebetween is performed.

10. The battery cell stack (100, 200) according to claim 8, wherein
the battery cell stack comprises a first battery cell stack (100) and a second battery cell stack (200),
the first battery cell stack (100) comprises a first electrode lead bundle (109'),
the second battery cell stack (200) comprises a second electrode lead bundle (109),
the first battery cell stack (100) and the second battery cell stack (200) are disposed so as to face each other in a state in which the first electrode lead bundle (109') and the second electrode lead bundle (109) are located adjacent to each other, and
coupling surfaces of the first electrode lead bundle (109') of the first battery cell stack (100) and the second electrode lead bundle (109) of the second battery cell stack (200) are coupled so as to be brought into tight contact with each other by the first connection member (510) and the second connection member (520).

11. A battery pack comprising the battery cell stack (100, 200) according to claim 8.

## Patentansprüche

1. Verbindungselement, ausgebildet, um eine elektrische Verbindung zwischen Elektrodenleitungen (102, 202, 303) durchzuführen, wobei
das Verbindungselement ein Paar aus einem ersten Verbindungselement (110, 210, 310, 410, 510) und einem zweiten Verbindungselement (120, 220, 320, 420, 520) umfasst,
eines des ersten Verbindungselements (110, 210, 310, 410, 510) und des zweiten Verbindungselements (120, 220, 320, 420, 520) mit einem Befestigungsabschnitt (113, 213, 313, 323, 413, 423) versehen ist, der ausgebildet ist, eine Verbindung zwischen diesen herzustellen, und
das andere des ersten Verbindungselements (110, 210, 310, 410, 510) und des zweiten Verbindungselements (120, 220, 320, 420, 520) mit einem Fangabschnitt (124, 224, 314, 324, 424) versehen ist, der ausgebildet ist, zu erlauben, dass der Befestigungsabschnitt (113, 213, 313, 323, 413, 423) daran befestigt wird, wobei
jedes des ersten Verbindungselements (110, 210, 310, 410, 510) und des zweiten Verbindungselements (120, 220, 320, 420, 520) eine Sammelschiene (111, 121), die ausgebildet ist, um eine elektrische Verbindung durchzuführen, und eine Platte (112, 122), die ausgebildet ist, die Sammelschiene (111, 121) zu befestigen, umfasst, und
der Befestigungsabschnitt (113, 213, 313, 323, 413, 423) und der Fangabschnitt (124, 224, 314, 324, 424) an den Platten gebildet sind,
wobei der Befestigungsabschnitt (113, 213, 313, 323, 413, 423) ausgebildet ist, an eine Oberfläche der Platte (112, 122) gekoppelt zu werden, während er dieselbe umhüllt, und der Fangabschnitt (124, 224, 314, 324, 424), der das Kopplungsteil mit dem Befestigungsabschnitt (113, 213, 313, 323, 413, 423) bildet, in einer Struktur ausgebildet ist, die eine darin gebildete Stufe aufweist, oder der Teil des Befestigungsabschnitts (113), der von dem Fangabschnitt (124) gefangen wird, um daran befestigt zu werden, klein ist, und der Fangabschnitt (124), der das Kopplungsteil mit dem Befestigungsabschnitt (113) bildet, in einer Struktur ausgebildet ist, die eine darin gebildete Ausnehmung aufweist.

2. Verbindungselement nach Anspruch 1, wobei jede der Platten (112, 122), die den Befestigungsabschnitt (113, 213, 313, 323, 413, 423) und den Fangabschnitt (124, 224, 314, 324, 424) umfasst, aus einem isolierenden Material hergestellt ist.

3. Verbindungselement nach Anspruch 1, wobei
der Befestigungsabschnitt (113, 213, 313, 323, 413, 423) und der Fangabschnitt (124, 224, 314, 324, 424) so gebildet sind, dass sie ein Kopplungspaar bilden, und
zwei oder mehr Kopplungspaare vorgesehen sind.

4. Verbindungselement nach Anspruch 3, wobei
zwei Befestigungsabschnitte (113, 213) an dem ersten Verbindungselement (110, 210, 510) gebildet sind, und
zwei Fangabschnitte (124, 224) an dem zweiten Verbindungselement (120, 220, 520) gebildet sind.

5. Verbindungselement nach Anspruch 3, wobei
ein Befestigungsabschnitt (313, 323, 413, 423) und ein Fangabschnitt (314, 324, 424) an jedem des ersten Verbindungselements (310, 410, 510) und des zweiten Verbindungselements (320, 420, 520) gebildet sind,
der Befestigungsabschnitt (313, 323, 413, 423) des ersten Verbindungselements (310, 410, 510) an dem Fangabschnitt (314, 324, 424) des zweiten Verbindungselements (320, 420, 520) befestigt ist, und
der Befestigungsabschnitt (313, 323, 413, 423) des zweiten Verbindungselements (320, 420, 520) an dem Fangabschnitt (314, 324, 424) des ersten Verbindungselements (310, 410, 510) befestigt ist.

6. Verbindungselement nach Anspruch 1, wobei mindestens ein Teil des Befestigungsabschnitts (113, 213, 313, 323, 413, 423) aus einem elastischen Material hergestellt ist.

7. Verbindungselement nach Anspruch 1, wobei mindestens ein Teil der Platte (112, 122) aus einem elastischen Material hergestellt ist.

8. Batteriezellenstapel (100, 200), bei dem eine elektrische Verbindung durch das Verbindungselement nach einem der Ansprüche 1 bis 7 durchgeführt wird, wobei
der Batteriezellenstapel (100, 200) durch zwei oder mehr Batteriezellen (101) gebildet ist,
die Batteriezellen (101) in engem Kontakt in einem Zustand angeordnet sind, in dem Kopplungsflächen von Elektrodenleitungen (102, 202, 303) der Batteriezellen (101) so angeordnet sind, dass sie einander gegenüberliegen, und
die Kopplungsflächen der Elektrodenleitungen (102, 202, 303) durch Befestigung des Verbindungselements in engen Kontakt miteinander gebracht werden.

9. Batteriezellenstapel (100, 200) nach Anspruch 8, wobei
die Elektrodenleitungen (102, 202, 303) in engem Kontakt angeordnet sind, um ein Elektrodenleitungsbündel (109, 109', 209, 309) zu bilden, und
äußerste Elektrodenleitungen (102, 202, 303) des Elektrodenleitungsbündels (109, 109', 209, 309) jeweils mit einer Sammelschiene (111) des ersten Verbindungselements (110, 210, 310, 410, 510) und einer Sammelschiene (121) des zweiten Verbindungselements (120, 220, 320, 420, 520) in engen Kontakt miteinander gebracht werden, wobei eine elektrische Verbindung zwischen diesen durchgeführt wird.

10. Batteriezellenstapel (100, 200) nach Anspruch 8, wobei
der Batteriezellenstapel einen ersten Batteriezellenstapel (100) und einen zweiten Batteriezellenstapel (200) umfasst,
der erste Batteriezellenstapel (100) ein erstes Elektrodenleitungsbündel (109') umfasst,
der zweite Batteriezellenstapel (200) ein zweites Elektrodenleitungsbündel (109) umfasst,
der erste Batteriezellenstapel (100) und der zweite Batteriezellenstapel (200) so angeordnet sind, dass sie einander gegenüberliegen, in einem Zustand, in dem das erste Elektrodenleitungsbündel (109') und das zweite Elektrodenleitungsbündel (109) benachbart zueinander angeordnet sind, und
Kopplungsflächen des ersten Elektrodenleitungsbündels (109') des ersten Batteriezellenstapels (100) und des zweiten Elektrodenleitungsbündels (109) des zweiten Batteriezellenstapels (200) durch das erste Verbindungselement (510) und das zweite Verbindungselement (520) gekoppelt sind, sodass sie in engen Kontakt miteinander gebracht werden.

11. Batteriepack, das den Batteriezellenstapel (100, 200) nach Anspruch 8 umfasst.

## Revendications

1. Élément de connexion configuré pour effectuer une connexion électrique entre des fils d'électrode (102, 202, 303), dans lequel
l'élément de connexion comprend une paire d'un premier élément de connexion (110, 210, 310, 410, 510) et d'un second élément de connexion (120, 220, 320, 420, 520),
l'un parmi le premier élément de connexion (110, 210, 310, 410, 510) et le second élément de connexion (120, 220, 320, 420, 520) est muni d'une portion de fixation (113, 213, 313, 323, 413, 423) configurée pour effectuer une connexion entre ceux-ci, et
l'autre parmi le premier élément de connexion (110, 210, 310, 410, 510) et le second élément de connexion (120, 220, 320, 420, 520) est muni d'une portion d'accrochage (124, 224, 314, 324, 424) configurée pour permettre à la portion de fixation (113, 213, 313, 323, 413, 423) d'y être fixée, dans lequel
chacun du premier élément de connexion (110, 210, 310, 410, 510) et du second élément de connexion (120, 220, 320, 420, 520) comprend une barre omnibus (111, 121) configurée pour effectuer une connexion électrique et une plaque (112, 122) configurée pour fixer la barre omnibus (111, 121), et
la portion de fixation (113, 213, 313, 323, 413, 423) et la portion d'accrochage (124, 224, 314, 324, 424) sont formées au niveau des plaques,
dans lequel la portion de fixation (113, 213, 313, 323, 413, 423) est configurée pour être couplée à une surface de la plaque (112, 122) en enveloppant celle-ci, et la portion d'accrochage (124, 224, 314, 324, 424) formant la partie de couplage avec la portion de fixation (113, 213, 313, 323, 413, 423) est configurée dans une structure présentant un ressaut formé dans celle-ci, ou la partie de la portion de fixation (113) qui est accrochée par la portion d'accrochage (124) de sorte à y être fixée est petite, et la portion d'accrochage (124) formant la partie de couplage avec la portion de fixation (113) est configurée dans une structure présentant un évidement formé dans celle-ci.

2. Élément de connexion selon la revendication 1, dans lequel chacune des plaques (112, 122) comprenant la portion de fixation (113, 213, 313, 323, 413, 423) et la portion d'accrochage (124, 224, 314, 324, 424) est constituée d'un matériau isolant.

3. Élément de connexion selon la revendication 1, dans lequel
la portion de fixation (113, 213, 313, 323, 413, 423) et la portion d'accrochage (124, 224, 314, 324, 424) sont formées de sorte à constituer une paire de couplage, et
deux paires de couplage ou plus sont fournies.

4. Élément de connexion selon la revendication 3, dans lequel
deux portions de fixation (113, 213) sont formées au niveau du premier élément de connexion (110, 210, 510), et
deux portions d'accrochage (124, 224) sont formées au niveau du second élément de connexion (120, 220, 520).

5. Élément de connexion selon la revendication 3, dans lequel
une portion de fixation (313, 323, 413, 423) et une portion d'accrochage (314, 324, 424) sont formées au niveau de chacun du premier élément de connexion (310, 410, 510) et du second élément de connexion (320, 420, 520),
la portion de fixation (313, 323, 413, 423) du premier élément de connexion (310, 410, 510) est fixée à la portion d'accrochage (314, 324, 424) du second élément de connexion (320, 420, 520), et
la portion de fixation (313, 323, 413, 423) du second élément de connexion (320, 420, 520) est fixée à la portion d'accrochage (314, 324, 424) du premier élément de connexion (310, 410, 510).

6. Élément de connexion selon la revendication 1, dans lequel au moins une partie de la portion de fixation (113, 213, 313, 323, 413, 423) est constituée d'un matériau élastique.

7. Élément de connexion selon la revendication 1, dans lequel au moins une partie de la plaque (112, 122) est constituée d'un matériau élastique.

8. Empilement d'éléments de batterie (100, 200) présentant une connexion électrique effectuée par l'élément de connexion selon l'une quelconque des revendications 1 à 7, dans lequel
l'empilement d'éléments de batterie (100, 200) est constitué de deux éléments de batterie (101) ou plus,
les éléments de batterie (101) sont agencés en contact étroit dans un état dans lequel des surfaces de couplage de fils d'électrode (102, 202, 303) des éléments de batterie (101) sont disposées de sorte à se faire face l'une à l'autre, et
les surfaces de couplage des fils d'électrode (102, 202, 303) sont amenées en contact étroit l'une avec l'autre par fixation de l'élément de connexion.

9. Empilement d'éléments de batterie (100, 200) selon la revendication 8, dans lequel
les fils d'électrode (102, 202, 303) sont agencés en contact étroit pour former un faisceau de fils d'électrode (109, 109', 209, 309), et
des fils d'électrode (102, 202, 303) les plus externes du faisceau de fils d'électrode (109, 109', 209, 309) sont amenés en contact étroit avec une barre omnibus (111) du premier élément de connexion (110, 210, 310, 410, 510) et une barre omnibus (121) du second élément de connexion (120, 220, 320, 420, 520), respectivement, de telle sorte qu'une connexion électrique entre ceux-ci est effectuée.

10. Empilement d'éléments de batterie (100, 200) selon la revendication 8, dans lequel
l'empilement d'éléments de batterie comprend un premier empilement d'éléments de batterie (100) et un second empilement d'éléments de batterie (200),
le premier empilement d'éléments de batterie (100) comprend un premier faisceau de fils d'électrode (109'),
le second empilement d'éléments de batterie (200) comprend un second faisceau de fils d'électrode (109),
le premier empilement d'éléments de batterie (100) et le second empilement d'éléments de batterie (200) sont disposés de sorte à se faire face l'un à l'autre dans un état dans lequel le premier faisceau de fils d'électrode (109') et le second faisceau de fils d'électrode (109) sont situés de manière adjacente l'un à l'autre, et
des surfaces de couplage du premier faisceau de fils d'électrode (109') du premier empilement d'éléments de batterie (100) et du second faisceau de fils d'électrode (109) du second empilement d'éléments de batterie (200) sont couplées de sorte à être amenées en contact étroit l'une avec l'autre par le premier élément de connexion (510) et le second élément de connexion (520).

11. Bloc-batterie comprenant l'empilement d'éléments de batterie (100, 200) selon la revendication 8.
